# EUROPEAN PATENT APPLICATION

(11) **EP 2 604 328 A1**
(43) Date of publication of application: **19.06.2013**
(21) Application number: 11193807.2
(22) Date of filing: 15.12.2011
(51) Int. Cl.: B01D 63/06, B01D 65/08

(54) **Membrane filtration assembly**

(71) Applicant: Tine SA, 0191 Oslo (NO)
(72) Inventor: Hoffmann, Tom, 1550 HØLEN (NO)
(74) Representative: Livgard, Kim Are Birkeli

(57) **Abstract**

The present invention relates to a membrane filtration assembly for the fractionation of protein in dairy products, whereby significant energy savings are achieved by the use of a specially adapted filling body that promotes turbulence on the permeate side of the membrane tube. The present invention also relates to the use of such a filling body within the membrane filtration assembly. The membrane filter assembly can also be used for the filtration and reduction of microorganisms, bacteria or bacterial spores.

## Description

### FIELD OF THE INVENTION

The present invention relates to a membrane filtration assembly for fluid to be subjected to filtration by means of membrane filtration.

### BACKGROUND OF THE INVENTION

Raw milk is almost without exception separated into a cream phase and a skim milk phase. Depending on which end product the milk is to be employed for, both of these phases are treated differently in a dairy. The skim milk which is to be further refined by protein fractionation and bacterial reduction and is often pasteurized, and possibly cream is added, after which it is cooled down to approximately 4°C and is stored in a tank until used in production.

During membrane filtration, the heat energy from circulation pumps in the membrane filtration assembly normally increases the temperature of the skim milk/retentate by 2-6°C. In order to maintain or decrease the temperature of the skim milk/retentate during membrane filtration, it is common to have some kind of cooling device placed in the circulation of the retentate (normally for small plants/pilot plants). Optionally, the skim milk is cooled down, prior to membrane filtration, to a temperature that ensures that the temperature in the circulation does not exceed the milk pre-treatment temperature.

However, if the temperature of the skim milk is reduced by 1°C, the flux through the membrane will decrease with about 2-3%, i.e. the membrane filtration efficiency is significantly reduced.

There are a number of different membrane filtration module systems on the market today. One of the two most common membrane module systems is based on gradient membranes. The other of said two most common membrane module systems is the so-called "uniform transmembrane pressure" system (UTP). For the most part the systems are identical, but with gradient membranes it is not required to circulate permeate with a permeate pump.

### The Gradient Membrane System:

One of the most common membrane module systems is based on gradient membranes. This type of system was developed as an alternative to the UTP system mentioned in more detail below. By using membranes having increased permeation resistance towards the input side of the membrane module, the system maintains a low but uniform permeate flow with high flux. Additionally, the system does not require a continuous circulation of permeate and does not suffer from complicated and time consuming membrane replacement procedures. Testing of gradient membranes has shown that it is efficient to limit permeate flux through the membrane in a controlled manner. The gradient membranes also makes forced permeate circulation redundant, and although it usually requires more valves, the systems are somewhat simpler. When there is no need for permeate pump, it is also anticipated that they use less energy. Without permeate circulation it is much more difficult to cool the membranes surface, so the system needs to be run at a lower temperature than a UTP-system with cooled permeate circulation. A lower temperature leads to lower permeate flux - and lower processing capacities. In a well optimized UTP system the permeate pump uses less than 25% of the energy of the retentate pump. If a gradient membrane system, however, has a flux that is lower than 75% of a comparable UTP system, then the total energy consumption will be greater for the gradient system. There are several documented cases for gradient systems that show a flux that is at least 25% lower than for comparable UTP systems. In addition, gradient ceramic membrane tubes cost on average 15% more than traditional ceramic membrane tubes.

### Uniform Transmembrane Pressure System (UTP):

In a UTP system it is preferable to have a circulation of both retentate and permeate. The circulation of retentate must be so large that the flow rate ensures that the tendency of fouling on the filter surface remains minimal. This is normally only achieved at flow rates above 6 m/s. A higher viscosity and higher concentration levels require higher fluid flow rates. Over the length of a ca. 1 meter ceramic membrane tube, the pressure drop at these flow rates will be around 3.5 Bar. If there is no circulation of permeate, the pressure on the membrane surface will be 3.5 Bar higher at the inlet of the tube than at the outlet. Then the strain on the membrane will be much higher at the inlet than at the outlet, and the strain will lead to fouling and rapid reduction of permeate flux. The main principle of UTP is to equalize the pressure difference, or transmembrane pressure (TMP), so that it will be similar along the entire length of the membrane tube. By including beads on the permeate side of the membrane, the system maintains a low but uniform transmembrane pressure with high flux, which reduces fouling and cake buildup, and improves the utilization of available filtration area. However, the system suffers from complicated and time consuming membrane and gasket replacement procedures that require that the tubes and all the beads need to be removed and then replaced. Proper cleaning of the beads is time consuming, and not always sufficiently thorough. Beads also have the potential of clogging the membrane pores. The system is also characterized by large permeate volumes and the requirement of continuous permeate circulation.

The present invention relates to membrane filters with one or several tubular inner flow channels for fluid which is to be filtered. The walls of these flow channels are present on the innerside of the membrane tubes and on the outerside of a supporting structure, through which the filtered fluid (permeate) passes. Permeate is collected in an outer flow channel, collection space, that is surrounded by the outer module casing.

Membrane filters may for example be used for food applications of different kinds such as protein separation of beer, wine and various fruit juices, e.g. apple juice. Dairy products, including milk and whey, may be purified from bacteria in membrane filters with a suitable pore size, and milk fat may also be removed.

When microfiltering a complex and difficult medium such as milk, the filter may rapidly become clogged due to the small particles in the milk entering into the filter and rapidly blocking the pores. By means of so called crossflow filtration the blocking rate may be diminished, but large flow rates in the filter channels bring about large pressure drops and consequently different pressure conditions along the filter channels. If the pressure difference across the membrane (the driving pressure) is increased, the capacity increases but the blocking rate increases and a large part of the available filter area is rapidly blocked. The result is an insufficient flow. A high driving pressure may also press unwanted particles to the permeate side. If the pore size is increased, a larger amount of fluid passes through the membrane but the retention, i.e. the separation of particles, is adversely affected.

One way of equalising the pressure differences between the two sides of the membrane along the filter channels is described in SE 396017. In this publication there is described a filtering method where a medium is forced to flow through a filter channel, which extends along one side of a membrane. In order to achieve the same driving pressure over the whole area of the membrane the pressure in the permeate channel, which extends along the other side of the membrane, is adapted to the pressure in the filter channel, e.g. by recirculation of the permeate. In order to achieve a high pressure in the recirculated permeate a large pumping capacity is needed, especially if the amount of permeate which is to circulate in the circuit is large. For these reasons recirculation of permeate in membrane filters of the kind described above has only been adopted on a limited scale due to the high cost of this procedure.

Norwegian patent NO 330181 B1 discloses a system and method for processing dairy products by means of membrane filtration based on the finding that it is the temperature of the membrane surfaces and not the temperature of the skim milk/retentate that is of most importance in order to avoid membrane fouling. The term "fouling" refers not only to microorganisms, but also to the temperature dependent denaturation of proteins and the precipitation of calcium phosphate. Precipitation of calcium phosphate is assumed to be one of the main causes of fouling in the membranes and the solubility of calcium phosphate is known to decrease with increasing temperature. By keeping the temperature of the membrane surfaces low, it is possible to increase the temperature of the skim milk/retentate thereby avoiding significant problems with membrane fouling. This has resulted in an improved method for processing dairy products by means of membrane filtration, where membrane fouling is significantly reduced and at the same time the flux through the membrane module is increased.

In spite of the recent significant advances, there is still a continued need to to find new features that enable better energy efficiency in the system while at the same time maintaining, and perhaps improving upon these said previous improvements.

One objective according to the present invention is to provide a system and method for processing fluid products by means of membrane filtration, without sacrificing previous advances, by way of inclusion of significant newly developed system components that lead to a higher flow/prosessing capacities, longer operation periods between maintenance cycles, less fouling, simplified cleaning procedures, better system control, more flexibility and lower cost - both in terms of membrane replacement, pump efficiency, lower energy usage and reduced "down time".

### SUMMARY OF THE INVENTION

A first aspect of the present invention relates to a membrane filter assembly, comprising one or more tubular flow channels for fluid to be subjected to filtration having an membrane wall with a supporting structure through which filtered fluid passes, an outer module casing enclosed around the tubular flow channel(s), a collection space for permeate, said tubular flow channel(s) and said collection space being connected to separate external circuits comprising means (e.g. circulation pumps) for circulating at least part of the retentate, means for circulating at least part of the permeate respectively, and a filling body being included within said collection space.

Preferred embodiments of the present invention are set forth in the dependent claims.

A second aspect of the present invention relates the membrane filter assembly according to the first aspect, further comprising a cooling device arranged to maintain a lower temperature in the permeate flow than in the retentate flow.

A third aspect of the present invention relates the membrane filter assembly according to the first aspect, further comprising an external casing enclosing around the collection space a coolant space for cooling fluid, said cooling space being surrounded by said outer casing and said external casing.

A fourth aspect of the present invention relates the membrane filter assembly according to any one of the previous aspects, wherein the filling body has a length in the range of 85-150 cm.

A fifth aspect of the present invention relates the membrane filter assembly according to the fourth aspect, wherein the filling body is comprised of a steel sheet that has an initial thickness in the range greater than or equal to 0.10 mm and less than 1.00 mm and after perforating, rolling and grinding has a thickness in the range less than or equal to 1.00 mm.

A sixth aspect of the present invention relates the membrane filter assembly according to the fourth aspect, wherein the filling body is comprised of perforated metal or synthetic perforated mesh or grating and has a thickness in the range 0.10-1.00 mm.

A seventh aspect of the present invention relates the membrane filter assembly according to the fifth or sixth aspect, wherein the filling body is comprised of raised profiles wherein the raised profiles point either inwards towards the outer wall of the membrane tube or outwards towards the wall of the module casing.

An eighth aspect of the present invention relates the membrane filter assembly according to the seventh aspect, wherein the filling body has raised profile edges that can be directed at an angle against the direction of the fluid flow or can be directed in the direction of the fluid flow.

A ninth aspect of the present invention relates the membrane filter assembly according to any one of the previous aspects, wherein the diameter of the membrane tube is on the order of 2.0 mm less than the diameter of the module casing.

A tenth aspect of the present invention relates the use of the membrane filter assembly according to any one of the previous aspects, for the fractionation of protein, wherein said membrane filter assembly is comprised of one or more tubular flow channels for fluid to be subjected to filtration having an membrane wall with a supporting structure through which filtered fluid passes, an outer casing enclosing around the tubular flow channel(s) a collection space for permeate, said tubular flow channel(s), said collection space being connected to separate external circuits comprising means for circulating at least part of the retentate, means for circulating at least part of the permeate respectively, and a filling body being included within said collection space.

An eleventh aspect of the present invention relates the use of the membrane filter assembly according to the tenth aspect, wherein said filling body is comprised of a rolled, perforated sheet of metal.

A twelfth aspect of the present invention relates the use of the membrane filter assembly according to the tenth or eleventh aspect, wherein said membrane filter assembly is for the processing of dairy products.

A thirteenth aspect of the present invention relates the use of the membrane filter assembly according to the twelfth aspect, wherein said dairy product is milk or whey. A fourteenth aspect of the present invention relates the membrane filter assembly or use thereof according to any one of the previous aspects, wherein said membrane filter assembly is for the filtration of microorganisms, bacteria or bacterial spores.

### DESCRIPTION OF THE FIGURES

Preferred embodiments of the present invention will now be illustrated in more detail with reference to the accompanying figures.

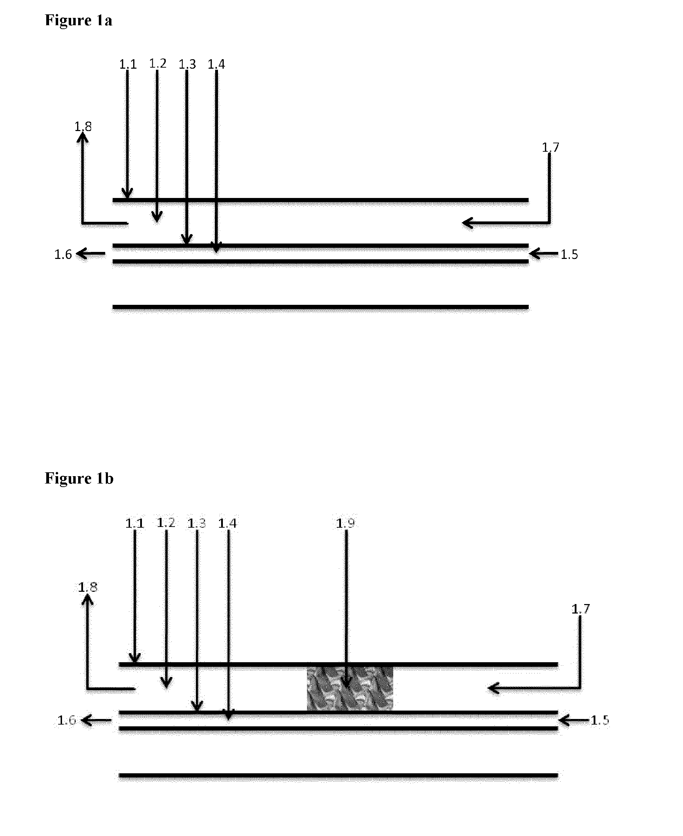

**Figure 1a** illustrates a membrane filter module comprising an module casing (1.1); permeate collection space (1.2); membrane tube (1.3); tubular flow channel (1.4); inlet (1.5) and outlet (1.6) for the fluid which is to be filtered; as well as inlet (1.7) and outlet (1.8) for the fluid which has passed through the membrane defining the walls of the tubular flow channel.
**Figure 1b** illustrates a membrane filter module comprising an module casing (1.1); permeate collection space (1.2); membrane (1.3); tubular flow channel (1.4); inlet (1.5) and outlet (1.6) for the fluid which is to be filtered; inlet (1.7) and outlet (1.8) for the fluid which has passed through the membrane defining the walls of the tubular flow channel; and a filling body (1.9). It is to be understood that the filling body is inserted into the entire innerside of the module casing (1.1), and thereby surrounds the entire outerside of the membrane tube (1.3).

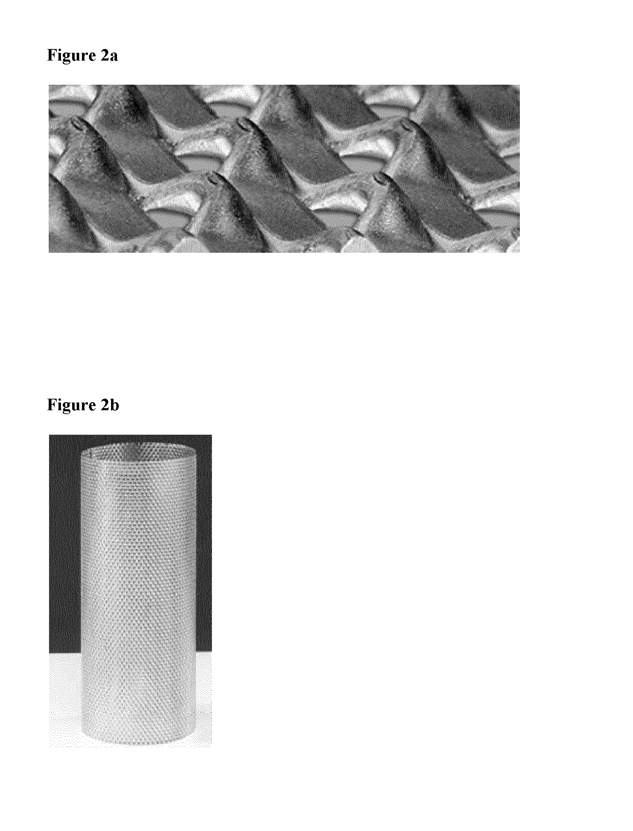

**Figure 2a** illustrates the surface structure of a filling body according to one embodiment of the present invention.
**Figure 2b** illustrates a filling body having a surface structure as shown in figure 2a.

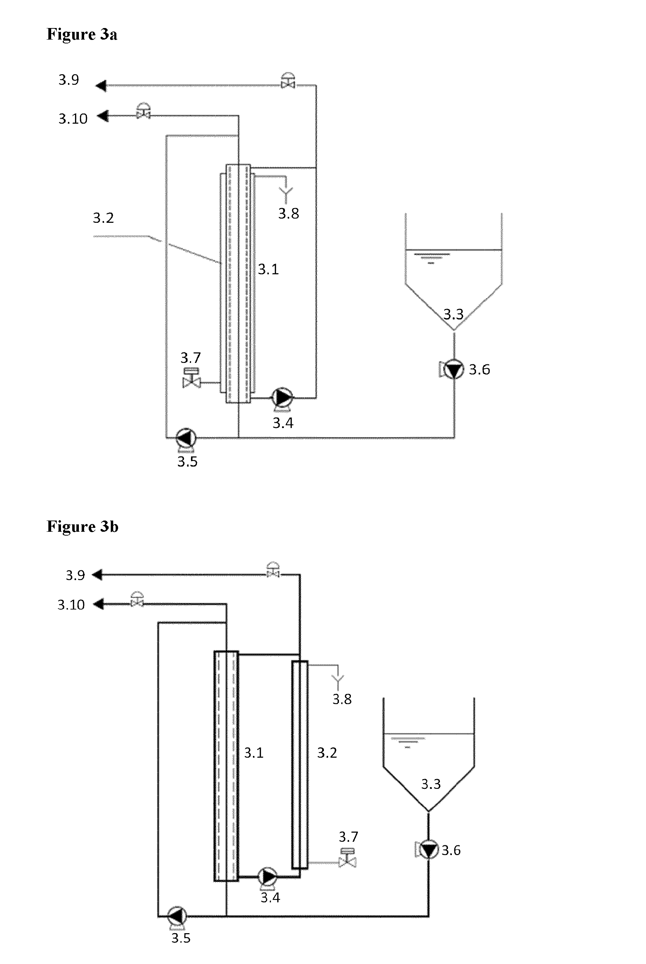

**Figure 3a** illustrates a membrane filter assembly comprising a membrane filter module (3.1) having an integrated cooling device (3.2); balance tank (3.3); means for circulating the fluid which has passed through the membrane (3.4); means for circulating the fluid which is to be filtered (3.5); means relocating the fluid present in the balance tank (3.6); inlet (3.7) and outlet (3.8) for the cooling fluid; permeate outlet (3.9) and retentate outlet (3.10).
**Figure 3b** illustrates a membrane filter assembly comprising a membrane filter module (3.1) having a separate cooling device (3.2); balance tank (3.3); means for circulating the fluid which has passed through the membrane (3.4); means for circulating the fluid which is to be filtered (3.5); means relocating the fluid present in the balance tank (3.6); inlet (3.7) and outlet (3.8) for the cooling fluid; permeate outlet (3.9) and retentate outlet (3.10).

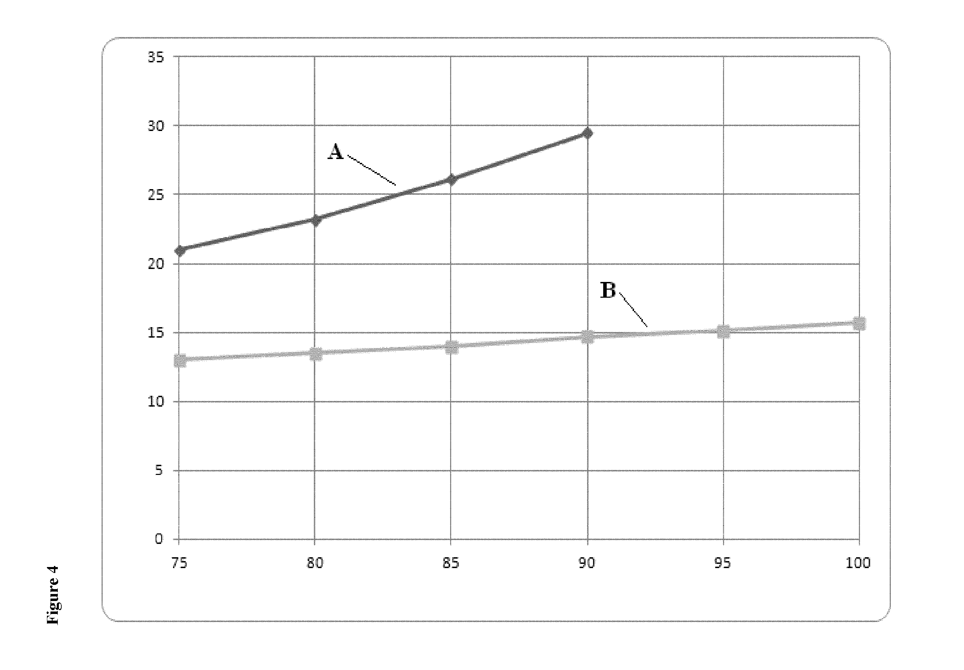

**Figure 4** illustrates a comparison plot of energy usage without and with a filling body in a filtration module. The y-axis shows the current usage as measured in amperes of the permeate pump without (A) and with (B) the filling body. The x-axis shows the relative speed of the retentate pump.

### DETAILED DESCRIPTION OF THE INVENTION

Surprisingly, it has recently been determined that the properties of turbulent flow have a very significant and advantageous effect on the amount of energy required to pump permeate through the membrane surface. With the use of a newly developed turbulence-generating insert-sleeve, or "filling body" that is placed into the gap in the flow channel between the membrane tube and the module casing. It is to be understood that, in the preferred embodiment, there is only one filling body for every flow channel. The flow becomes restricted leading to a breakdown of laminer flow on the permeate side, which in turn leads to a larger pressure drop at lower pump energies. The filling body will have the same role as the beads as known from before, but the dead volume is reduced and several maintenance disadvantages of beads are alleviated. The use of a filling body importantly reduces the amount of dead volume in the fluid system. In conjunction with the startup and shutdown, it is important that the dead volume in the system is as small as possible, because the system is normally started first with only water before the milk is added. This means that there is always a certain amount of mixture of milk and water in the beginning and the end. A larger dead volume gives a larger quantity of mixed phase. The use of a filling body, as given in the present invention, is thus is very advantageous and also leads to better energy efficiency.

The properties of the filling body are outlined, but not limited, by the following:
- A rolled, perforated sheet of metal or wire mesh or coil springs or other flexible or rolled materials can be used.
- The selection of metal would be chosen from metals that are acceptable for use in the food production industry such as stainless steel, mild steel or duplex steel and preferably a rust-free steel that is easy to clean.
- Length: approximately the same length as the membrane tube, in the range 85-150 cm, more preferably between 90-130 cm and even more preferably between 100-120 cm.
- Inner diameter of filling body: inner diameter is greater than or equal to the outer diameter of the membrane tube by definition. This will vary depending on the various types and dimensions of the membrane tubes. Possible ranges for the diameter for a filling body lie between 15-60 mm, and more preferably between 25-40 mm.
- Material thickness (initial): from 0.10 mm to less than 1.00 mm, more preferably in the range 0.20-0.30 mm. Thickness after perforating, rolling and grinding can be in the range 0.10-1.00 mm with raised edges and more preferably in the range 0.30-0.50 mm. Different thicknesses of different filling bodies can be matched to each of the module casings and membrane tubes (to account for tolerance differences).
- Perforations: the diameter of the perforations is in the range 0.10-1.00 mm, more preferably in the range 0.15-0.50 mm and even more preferably in the range 0.15-0.20 mm.
- The gap between the module casing and the membrane tube. The diameter of the membrane tube is on the order of 2.0 mm less than the diameter of the module casing. The gap can be reduced to further reduce pump energy usage, but is dependent on machining tolerances. Gap size is less important because the chosen filling body can be matched to the dimensions of the membrane tube and casing.

As previously used in the field, ceramic membrane tubes were initially 850 mm long, but now there are several standards, where nearly all are slightly longer than 1 meter in length. In each tube, there can be several channels and the membrane surface is located inside the channels. For industrial use module casings can accommodate a large number of tubes, and designs may vary. Often two modules are put in series in a circulation circuit. Large pumping capacities are required in order to reach a desired fluid flow rate through the channels in the membrane tubes. Fluid flow rates of 6-7 m/s are common and are preferable in order to reduce fouling. The TMP between retentate and permeate is a central aspect for permeation through the membrane. For microfiltration, a very low TMP is used. The TMP is normally in the range between 0.2 to 0.5 Bar.

A membrane is a tubular structure made of ceramic material with several channels, whereby the surface in contact with the fluid has an active layer which determines the porosity (cut off) of the filter. The active layer is full of holes of different diameters in order to allow the passage of the selected molecules. The membranes in the membrane filtration module have a supporting structure often consisting of oxides of zirconium, titanium or aluminum, but may also be manufactured from other materials such as glass, polymers or the like. Eventhough the present disclosure is focused on the use of membranes, it should also be understood that micro-sieves may be utilized instead of membranes without deviating from the inventive concept of the present disclosure.

The filter in the membrane filtration module is preferably selected from the group consisting of microfilter (MF), ultrafilter (UF) and nanofilter (NF).

A given filter module may also contain several membrane tubes consisting of different effective pore sizes. The usual range of effective pore sizes is given in the following.

In one preferred embodiment according to the present invention, at least one membrane tube within a filtration module has a filter with an effective pore size in the range 0.5-2.0 µm, more preferably in the range 0.8-2.0 µm and most preferably in the range 0.8-1.4 µm. Filters having a pore size in this range are particularly suitable for reducing the amount of microorganisms, bacteria and bacterial spores in the dairy product.

In one preferred embodiment according to the present invention, at least one membrane tube within a filtration module has a filter with an effective pore size in the range 0.05-0.5 µm, more preferably in the range 0.05-0.3 µm and most preferably in the range 0.1-0.2 µm. Filters having a pore size in this range are particularly suitable for fractionating the proteins, particularly casein proteins, present in the dairy product.

The typical temperature ranges before and during a filtration process with the membrane filter assembly according to an embodiment of the present invention are given as follows:
- The dairy product is heated to a temperature in the range 50-65 °C prior to membrane filtration,
- The retentate fraction is maintained at a temperature in the range 50-65°C during membrane filtration,
- The temperature of the permeate fraction is maintained at a temperature in the range 0-64°C during membrane filtration,
- The temperature differential between the permeate and the retentate fraction is at least 1 °C, the permeate fraction being cooler than the retentate fraction.

For typical embodiments of the present invention, module casings for 7, 19, 37 or 52 membrane tubes have been constructed. Various diameters for ceramic membrane tubes are also known in the field, and module casings with appropriate filling body dimensions can be constructed for these variations. These module casings may have integrated heat exchanger channels in the module casing, which ensures an exact cooling of the permeate circulation and can eliminate the need for a separate cooler. New design of instrumentation and control of the transmembrane pressure ensures optimum utilization of the membranes, allows for high operating temperatures and provides high permeate flux at low and uniform transmembrane pressure. Other embodiments for filling bodies may include the possibility for containing non-circular membrane tubes. Such membrane tubes may have typically 3, 4, 5, 6 or more sides. Other embodiments may also employ non-ceramic membrane tubes such as polymers. The module casing or casings and corresponding filling body or filling bodies would thus need to be constructed to adapt to the differently shaped membrane tubes.

In review, the result of this finding is an improved filtration method with the following advantages:
- Due to a low dead volume, there are less phase boundary issues at startup, shutdown and cleaning.
- Better efficiency in the facility will use less total energy in the system than a gradient membrane system, although there are extra permeate pumps for circulation.
- Proper management of TMP allows for longer operating times. The surface area along the entire membrane will have essentially the same conditions, so that it much less prone to fouling. The cleaning procedure is therefore easier.
- Circulation of the permeate side ensures effective cleaning on this side also.

The filling body as shown in figures 1b (1.9), 2a and 2b illustrates one embodiment according to the invention where the material used for the filling body can be composed of a perforated, rolled, cylindrical, sheet, whereby the perforation pattern has raised "grated" profiles, which assists in creating turbulent flow and flow resistance in the permeate. The raised pattern can be in the outward or inward direction, wherein the reverse side may be smooth. Smooth, rolled, cylindrical, perforated sheets can also be used as a filling body, but less turbulence and flow resistance may be expected. In all cases, whether with raised profiles or smooth, there may be flow on both sides of the filling body. In the case of a smooth, flat, perforated filling body, the perforations may have any type of shape, such as round, square, triangular, rectangular, semi-elliptical, etc. With the use of raised profiles, the profiles may also have an unlimited variety of shapes, such as drop-form, square, triangular, rectangular, semi-elliptical, etc. The term "perforation" refers to perforated sheets of all kinds, mesh and grating (welded, pressed, crimped, coated with synthetic materials, etc.), metal fabric, synthetic fabrics and fabrics of other materials, and possibly in combination with coil springs, metal ribbing, lattice gratings etc. The thickness of such materials can be in the range 0.10-1.00 mm. Some embodiments can include raised profiles that are raised in either the inward and outward directions or a combination of both. The raised edges of the profiles can be either in or against the direction of the fluid flow, whereby the profiles are raised at an angle against the fluid flow. In the embodiment as shown in figure 1b, the raised edges of the profiles are in the direction of the fluid flow. Some embodiments can include raised profiles that are arranged in either the longitudinal or radial direction or in any combination of both. In another embodiment, the filling body may be comprised of more than one body in a casing module that are connected, in series, together end-to-end. In this case, the total length of the filling body still corresponds to the length of the membrane tube and casing module as before. The term "filling body" according to the present invention does in general not refer to the use of polypropylene beads, other bead shaped materials, single or inter-linked, or steel wool.

In one embodiment according to the present invention, the membrane filtration module has an integrated cooling device (figure 3a, 3.2) which renders a separate permeate cooling device (as shown in figure 3b, 3.2) superfluous. The integrated cooling device may be any kind of cooling device suitable to be integrated with a membrane filtration module.

In another embodiment according to the present invention, the permeate flow is led, e.g. using a circulation pump (figure 3b, 3.4), to a cooling device (figure 3b, 3.2). The cooling device may be any kind of device suitable for lowering the temperature of the permeate flow such as a heat exchanger, e.g. a plate heat exchanger or more preferably a tube heat exchanger. In figures 3a and 3b, the permeate and retantate flows are shown to be cocurrent.

The technical effect attributed to the present invention is shown in figure 4. Without a filling body, as shown in curve A, the permeate pump can only be run to the 90% speed level for the retentate pump. The permeate pump would become overloaded at a higher speed. As can be seen from the curves this problem is solved with the insertion of the filling body. When the speed of the retentate pump increases, there will be a higher pressure drop through the retentate channels. To retain a constant TMP, the permeate pump has to provide a similar pressure drop through the permeate collection space. The flatness of curve B, compared to curve A, over the entire range of the retentate pump speed is due to the turbulence created by the profiled filling body. Relatively minor increases in permeate pump speed correspond to significant increases in turbulence. The energy savings with the filling body is in excess of 50% when the retentate pump speed is operated at the appropriate operating conditions. This corresponds to a fluid speed of about 6 m/s at the 85% level and higher for the speed of the retentate pump. With the proper construction of the filling body, the pump energy for the permeate pump can be reduced to well below 25% of the energy used for the retentate pump. And, in comparison from earlier work with bead systems, this new system is estimated to give an energy savings of about 23-25%.

### Example

For the particular test for the determination of energy savings as shown in figure 4, the experimental conditions consisted of the following parameters and materials: Membrane filtration assembly having:
o a feed inlet opening to the retentate side of a membrane filter;
o a retentate outlet;
o a means for recirculating (e.g. circulation pump) at least part of the retentate from the retentate outlet to the retentate inlet;
o a permeate outlet;
o a means for recirculating (e.g. circulation pump) at least part of the permeate from the permeate outlet to the permeate inlet; and
o a cooling device being arranged to maintain a lower temperature in the permeate flow than in the retentate flow;
o said inlets, outlets and means for recirculation (e.g. circulation pumps) being arranged to maintain a retentate flow on the retentate side of the membrane filter and a permeate flow on the permeate side of the membrane filter in such a manner that the two flows are cocurrently passed along the membrane filter.

- a filling body comprised of a rolled sheet of steel (CONIDUR^{®} from Hein & Lehmann, Krefeld, Germany) with an initial thickness of 0.2 mm. After perforation, the thickness increased to 0.30-0.40 mm. The outerside was flat while the edges of the raised profiled innerside was directed inwards towards the ceramic membrane tube. The perforation diameter was in the range 0.15-0.20 mm.
- a ceramic membrane tube with a pore size of 0.14 µm (sunflower-type from Tami Industries, Nyons, France).

The experiments were run at a temperature 50°C inside the filtration assembly. These tests were run with pure water. Other fluids with higher viscosities would theoretically yield larger energy savings. The volumetric flow rate was on the order of 1,100 liters/hr. The tests were run such that the permeate flow across the filter membrane was the same, with or without a filling body. The system was allowed to stabilize for several minutes for each step. This example would be applicable for both of the operational conditions as shown in figure 3a or 3b.

The membrane filtration module utilized according to the present invention may be any membrane module suitable for processing fluid products, in particular dairy products, such as a membrane module system based mainly on the UTP principle. The present invention, or as disclosed in Norwegian patent NO 330181 B1, could also be used in a gradient system, but would require that a cooling system is located on the same side as the permeate flow, and forced permeate circulation is needed in order to have a cooling effect on the membranes.

Although the foregoing invention has been described in some detail by way of illustration and example for purposes of clarity of understanding, it will be readily apparent to those of ordinary skill in the art in light of the teachings of this invention that certain changes and modifications may be made thereto without departing from the scope of the appended claims.

## Claims

1. Membrane filter assembly, comprising one or more tubular flow channels (1.4) for fluid to be subjected to filtration having an membrane wall (1.3) with a supporting structure through which filtered fluid passes, an outer module casing (1.1) enclosed around the tubular flow channel(s) a collection space (1.2) for permeate, said tubular flow channel(s) and said collection space being connected to separate external circuits comprising means (3.5, 3.4) for circulating at least part of the retentate, means for circulating at least part of the permeate respectively, and a filling body (1.9) being included within said collection space.

2. Membrane filter assembly according to claim 1, further comprising a cooling device (3.2) arranged to maintain a lower temperature in the permeate flow than in the retentate flow.

3. Membrane filter assembly according to claim 1, further comprising an external casing enclosing around the collection space (1.2) a coolant space for cooling fluid, said cooling space being surrounded by said outer casing and said external casing.

4. Membrane filter assembly according to any one of the claims 1-3, wherein the filling body (1.9) has a length in the range of 85-150 cm.

5. Membrane filter assembly according to claim 4, wherein the filling body (1.9) is comprised of a steel sheet that has an initial thickness in the range greater than or equal to 0.10 mm and less than 1.00 mm and after perforating, rolling and grinding has a thickness in the range less than or equal to 1.00 mm.

6. Membrane filter assembly according to claim 4, wherein the filling body (1.9) is comprised of perforated metal or synthetic perforated mesh or grating and has a thickness in the range 0.10-1.00 mm.

7. Membrane filter assembly according to claim 5 or 6, wherein the filling body (1.9) is comprised of raised profiles wherein the raised profiles (1.9) point either inwards towards the outer wall of the membrane tube (1.3) or outwards towards the wall of the module casing (1.9).

8. Membrane filter assembly according to claim 7, wherein the filling body (1.9) has raised profile edges that can be directed at an angle against the direction of the fluid flow or can be directed with the direction of the fluid flow.

9. Membrane filter assembly according to any one of the claims 1-8, wherein the diameter of the membrane tube (1.3) is on the order of 2.0 mm less than the diameter of the module casing (1.1).

10. Use of a membrane filter assembly according to any one of the claims 1-9, for the fractionation of protein, wherein said membrane filter assembly is comprised of one or more tubular flow channels (1.4) for fluid to be subjected to filtration having an membrane wall (1.3) with a supporting structure through which filtered fluid passes, an outer casing (1.1) enclosing around the tubular flow channel(s) a collection space (1.2) for permeate, said tubular flow channel(s), said collection space being connected to separate external circuits comprising means (3.5, 3.4) for circulating at least part of the retentate, means for circulating at least part of the permeate respectively, and a filling body (1.9) being included within said collection space.

11. Use of a membrane filter assembly for the fractionation of protein according to claim 10, wherein said filling body (1.9) is comprised of a rolled, perforated sheet of metal.

12. Use of a membrane filter assembly for the fractionation of protein according to claim 10 or 11, wherein said membrane filter assembly is for the processing of dairy products.

13. Use of a membrane filter assembly for the fractionation of protein according to claim 12, wherein said dairy product is milk or whey.

14. Use of a membrane filter assembly according to any one of the proceeding claims, wherein said membrane filter assembly is for the filtration of microorganisms, bacteria or bacterial spores.
